# EUROPEAN PATENT SPECIFICATION

(11) **EP 3 562 323 B1**
(45) Date of publication and mention of the grant of the patent: **02.08.2023**
(21) Application number: 16925457.0
(22) Date of filing: 30.12.2016
(51) Int. Cl.: A23L 3/00, A23L 27/00, A23P 10/25

(54) **PROCESS FOR MAKING FOOD GRANULES**
VERFAHREN ZUR HERSTELLUNG VON LEBENSMITTELGRANULATEN
PROCÉDÉ DE FABRICATION DE GRANULÉS ALIMENTAIRES

(43) Date of publication of application: 06.11.2019
(73) Proprietor: Nestec S.A., 1800 Vevey (CH)
(72) Inventor: TANG, Tianyue, Shanghai 201101 (CN); SHI, Weifeng, Shanghai 200040 (CN); GU, Yue, Shanghai 201103 (CN)
(74) Representative: Dinger, Hansjörg
(86) International application number: PCT/CN2016/113640
(87) International publication number: WO 2018/120075

(56) References cited:
- EP-A1- 1 074 188
- WO-A1-2008/086918
- WO-A1-2011/069885
- CN-A- 101 374 427
- CN-A- 103 404 823
- JP-A- H08 116 909
- KR-B1- 100 881 974
- US-A- 3 492 128
- US-A- 3 987 207
- US-A- 4 797 292
- MA QIANTING et al.: "Preparation of vegetable oil entrapped citric acid granules", Mechanical and Electrical Information, no. 23, 31 December 2011 (2011-12-31), pages 8-9, XP009515272,

## Description

The present invention relates to a process for making food granules, where the granules comprise citric acid particles, further crystalline ingredients, an oil, and optionally spices and/or flavorings. The invention is defined by the appended claims.

Granulation has been used in the food industry for a long time to produce agglomerates with improved dispensability when compared to fine powders. The known use of water as agglomerating agent for granulation generally is limited to the agglomeration of water soluble particles which after having been wetted stick together forming liquid bridges. During drying the liquid bridges are transformed into stable solid bridges which hold together the fine food ingredients and particles which constitute the matter of the food granules.

For example GB 1,112,553 discloses such a process for producing granules which comprises crystalloid material obtained via crystallization from a hydrolyzed dextrose solution.

EP 1'074'188 A1 discloses a free flowing granulated food product comprising a swelling powdered food material with granules having a relatively big mean diameter particle size of 600 to 1200 um. A process for producing these granules is disclosed as well, and where agglomeration of the powdered material is in a fluidized bed in order to obtain the granular food product. Fluidization of a premix comprising 2-10 wt% of a melting fat and 78-92 wt% of filler is done with an ascending current of air having a temperature from 80 to 120°C and with using 2-8 wt% of a binding agent. The binding agent was gum arabic. The disclosed food granules have an improved wettability when compared to smaller granules which were agglomerated in a fluidized bed system at a lower temperature profile.

Albeit producing better soluble food granules, the process disclosed in EP 1'074'188 A1 has the disadvantage that heating flavor compositions used as part of the filler to 80°C or more results in a continuous loss of important volatile flavor compounds. Furthermore, today's consumers start to shy away from food products which contain added hydrocolloids and food gums.

EP 1'074'188 A1 further mentions that when processing hygroscopic food powders with using water as a spraying agent often a de-fluidization of material due to over-wetting can be observed.

WO2008/058602 A1 discloses a method for producing a granular food product containing 1-20 wt% oil or fat, where the powdery ingredients are mixed with water and then cold extruded into granules, which were dried thereafter. The document does not disclose the presence and use of a hygroscopic food material such as a hygroscopic organic acid for incorporation into the granular food product.

WO2011/069885 A1 discloses a granular savoury food concentrate which comprises 10-65 wt% salt, 1-20 wt% yeast extract and from 10-50 wt% flour, starch or a mixture thereof. For producing the granular food concentrate, the salt and flour/starch mixture was wetted with water, yeast extract was added simultaneously or thereafter, and the wet mass was then wet-extracted into granules at a cold or warm temperature. The document describes that this wet-granulation can be achieved by pressing the wet mass through a sieve and thereby forming granules. Such wet-granulation can be achieved by shear granulators, high speed mixer granulators, extruders or fluidized bed granulators.

WO2011/069885 A1 further discloses that relatively high amounts of yeast extract in the granulation mixture result in a blockage of the granulation machinery because of a very high resistance due to the hygroscopic nature of the yeast extract. For this reason, the content of yeast extract in conventional granulation mixtures has been typically limited to less than 1 wt%. WO2011/069885 A1 solves this problem by adding the yeast extract to the granulation mixture during or after the mixing with water.

JPH08116909A describes a method for producing a coating acidulant powder which can be widely used as a sour agent for various foods. At room temperature, a crystalline, powdery acidulant powder is intimately mixed with a lipid powder having a melting point of 40°C or more as coating agent, and the lipid powder is uniformly dispersed over the entire surface of the acidulant.

US3492128A relates to a method of coating food-grade materials which are useful in the manufacture of cake mixes and doughs which are subject to long storage periods. Accordingly, a method of producing a non-caking, heat stable food-grade material selected from the group consisting of citric acid, fumaric acid, malic acid, adipic acid, tartaric acid and glucono-delta-lactone is disclosed, which comprises adding to said granular, food-grade material with continuous agitation, a liquefied oil selected from the group consisting of hydrogenated peanut oil, cottonseed oil, coconut oil, babassu oil and tucum oil until a total amount of between about 10 % and about 30 % by weight of said oil has been added while maintaining the temperature of the admixture between about 90°F to about 160°F and thereafter cooling the admixture to at least below the softening temperature of said oil before recovery of product.

MA QIANTING et al.: "Preparation of vegetable oil entrapped citric acid granules", Mechanical and Electrical Information no. 23, 31 December 2011 (2011-12-31), pages 8-9, XP009515272, discloses the preparation of vegetable oil-embedded citric acid particles by using fluidized spray condensation. The vegetable oil used has a density of 0.88 g/mL, is white in solid state at room temperature and dissolves into the liquid state at 50°C.

WO2008/086918A1 relates to a relates to a particulate bouillon or seasoning concentrate, and a process for preparing it. Disclosed is a process to produce a concentrate in the form of particles for preparing bouillon, soups, sauces, gravies or for use as a seasoning, comprising at least the following steps: a. Preparing a mixture comprising at least two of the following components; salt, monosodiumglutamate, sugar, starch, fat; b. preparing particles from said mixture, at least 80% wt. of the particles having a dimension of coarser than 2 mm as determined by sieve analysis, c. grinding said particles to give particles with a particle dimension between 200 µm and 2 mm as determined by sieve analysis, d. optionally removing particles below a dimension of from 200 µm as determined by sieve analysis, wherein step (b) is effected by one of the processes comprising granulation, agglomeration, extrusion or a combination thereof.

The present inventors have further identified that cold wet-granulation according to prior art technology is not only very difficult to achieve when high amounts of hygroscopic yeast extract are present in the granulation mixture, but also that the typical cold wet-granulation process is not optimal when even small amounts of a hygro-sensitive organic acid, such as citric acid in the form of a salt or powder, are used in the mixture to be granulated.

Hence, there is a persisting need in the art and the food industry to find better solutions and/or alternative solutions to granulate food materials comprising particles of citric acid.

The object of the present invention is to improve the state of the art and to provide an improved or alternative solution to the industry to overcome at least some of the inconveniences described above.

The object of the present invention is to find better solutions and/or alternative solutions to granulate food materials comprising citric acid particles, such as citric acid powder or crystals.

The object of the present invention is achieved by the subject matter of the independent claims. The dependent claims further develop the idea of the present invention.

Accordingly, the present invention provides in a first aspect a process as defined in claim 1.

In a second aspect, the invention relates to food granules which are obtainable by the process of the present invention.

It has been found by the inventors that when crystals or powder of citric acid are first coated with a liquid oil or a solid fat at room temperature of about 20°C before the addition of other food ingredients such as salts, sugars, possibly starches and optionally dry spices and/or flavorings, and wetted thereafter with water or an aqueous wet composition, this wet-food mass can be much better extruded in a standard wet-granulation equipment at room temperature. Furthermore and in particular, the inventors have surprisingly found that when the citric acid particles, i.e. the crystals or powder, are first coated with an oil liquid at room temperature, the throughput of the granulation extrusion, i.e. the maximal speed with which the wet-food mass can be extruded in an industrial type granulator, is even significantly better and the risk of blocking the granulation equipment much reduced, as when compared to a same process where the citric acid particles have been coated with a fat solid at room temperature. Evidence for this is provided in the Examples section below. Hence, this invention provides a new solution to more efficiently cold and wet granulate food masses which comprise even small amounts of citric acid in some particulate form.

Furthermore, this invention also provides a new technology to actually cold granulate wet masses which comprise citric acid particles and dried spices, such as for example a dried spice powder. This is particularly interesting because citric acid particles and dry spices have a very different water affinity and wettability. So far it was difficult to cold extrude wetted masses comprising those two materials together.

Advantageously, the present invention now allows to more efficiently cold extrude a wet food mass which comprises citric acid particles. Prior art technology did allow this only with a limited and reduced efficiency.

Furthermore, cold extrusion of food granules, and particularly of culinary food granules, is preferred over granulation or agglomeration technologies which are carried out at higher temperatures. This is because flavors and particularly volatile flavor compounds are much better preserved and contained with a process operating at cold or room temperature. Consequently, cold wet-extrusion of food materials better preserves the natural aspect as to flavor, taste and color of its original ingredients in the final granules as when compared to hot extrusion technologies.

### Detailed Description of the invention

The present invention provides in a first aspect a process as defined in claim 1.

"Food granules" as of the present invention are mechanically stable, free flowing granules composed of fine food ingredients and particles which constitute the matter of the food granules. The diameter size of the granules is usually between 0.5 and 8.0 mm. Preferably, the diameter size of the granules is between 0.8 and 5.0 mm, or between 0.7 and 4.0 mm, more preferably between 1.0 and 3.5 mm. The diameter is taken here as the longest diameter through the particle. The food granules have a good wettability and solubility for example in hot water.

"Mechanically stable" means that the food granules are sufficiently resistant to disintegration during normal filling and stocking procedures in packaging solutions, for example individual packs, and distribution of such packs in the commerce to individual consumers.

"Citric acid particles" refer to particles substantially composed of citric acid. Such particles can be crystals, powders or amorphous particles of citric acid. Such citric acid particles readily take up, absorb and retain moisture, i.e. water molecules from the surrounding e.g. at normal room temperature. Thereby the absorbing acid material may physically change and become for example liquid.

"An aqueous composition" refers herein to a composition comprising water. Preferably, the composition is a wet food composition comprising water. For example the aqueous composition can be a vegetable or fruit purée, a vegetable or fruit juice, a fermentation supernatant, a liquid plant or meat extract, or a syrup.

"Cold extrusion through a sieve" can be achieved with using specific granulation equipment such as for example a wet sieve granulator, a rotor system granulator, or a basket granulator. The sieve can be a metal sieve, a plastic sieve, a net or a mesh. The mesh size of the sieve can range from Standard US mesh size 8 to ca. 40. Preferably, the mesh size of the sieve is from 10 to 20 mesh, more preferably from 12 to 16 mesh. "Cold" means that the extrusion is carried out at a temperature of below 30°C. Preferably, the extrusion temperature is between 8 and 25°C.

"Drying" refers herein to a process of reducing the final moisture content of the granules. This can be achieved for example by just exposing the granules to dry ambient, warm or hot air, by vacuum drying, or by drying with a fluid bed dryer.

The citric acid particles of the present invention are preferably crystalline. The particles can be in powder form or in form of larger particles, ranging from ca. 0.1 mm to 2.5 mm in diameter.

For the process of the present invention, the further crystalline ingredients are selected from crystalline ingredients which are not hygroscopic or deliquescent. For example, further crystalline ingredients are selected from the group consisting of sodium chloride, monosodium glutamate, sugar (e.g. one or different kind of sugars), or a combination thereof.

In an embodiment of the present invention, the oil is liquid at a temperature of 25°C, preferably at a temperature of 20°C. Preferably, the oil is a vegetable oil. Such a vegetable oil can be extracted from plant material. Preferably, the oil is safe for human or animal consumption and is preferably selected from the group consisting of soybean oil, sunflower oil, rapeseed oil, corn oil and olive oil.

In an embodiment of the present invention, the food granules comprise the oil in relation to the citric acid particles in a dry weight ratio of 0.25:1 to 5:1, preferably in a dry weight ratio of 0.5:1 to 4:1. It has been observed by the inventors that coating of the citric acid particles with the oil is optimal when used in those ratios. If however too little oil is used, not all of the citric acid will be sufficiently coated; and if too much of the oil is used in relation to the citric acid, free oil may be present in abundance. This may have a negative effect in the ingredient mixture of the following processing steps. For example, this may result in an oiling-out of the wet mass or of the final granules after granulation, which may not be desirable.

In another embodiment of the present invention, the food granules comprise the citric acid particles in an amount from 0.1 to 7.0 wt%, preferably from 0.25 to 5.0 wt%, more preferably from 0.5 to 4.0 wt%, even more preferably from 0.75 to 2.5 wt% (weight per cent of the total food granules). Those amounts of citric acid are typically well desired and sufficient to provide the food granules with a well-balanced nice flavor, to improve the preservative quality of the food granules, and/or to provide a certain desired pH buffer to the composition of the food granules.

In a further embodiment of the present invention, the food granules further comprise starch. Starch can be in the form of a purified natural or modified starch such as for example corn starch, potato starch, tapioca starch, pea starch, rice starch, or a combination thereof. Starch can also be in the form of flour, such as for example wheat flour, corn flour, rice flour, or a combination thereof. Starch can also be a combination of purified natural or modified starch and flour.

Preferably, the starch may be present in the food granules in an amount from 2 to 60 wt%, or from 5 to 20 wt%. The starch may be post-dried or un-gelatinized starch.

In a still further embodiment of the present invention, spices and/or flavorings are added in step b), preferably in the form of a powder. The spices can be selected from the group consisting of cumin, cinnamon, star anis, pepper, chili, turmeric, ginger, or a combination thereof. Flavorings can be selected from the group consisting of a hydrolyzed or non-hydrolyzed vegetable powder, a soy protein hydrolysate, a tomato powder, an onion powder, a garlic powder, a hydrolyzed or non-hydrolyzed meat powder, a yeast extract, or a combination thereof.

In one embodiment of the present invention, step a) of the present process is carried out at a temperature between 4 and 30°C, preferably between 8 and 25°C. As the oil is preferably liquid at those temperatures, it is not necessary to heat the citric acid particles together with the oil in order to coat them. This allows to save costs and time. Furthermore, it allows also to reduce the risk of oil oxidation and degradation which could occur during such a heating step.

In a still further embodiment, also the steps b), c) and d) are carried out at a temperature between 4 and 30°C, preferably between 8 and 25°C. Also here, those processing steps at a reduced temperature allow to reduce the risk of oil oxidation and degradation which could occur during heating of the composition and which would lead to off tastes and bad flavors. Mainly the oil component of the food granules would remain natural and delicate in taste and flavor, and would preserve its full healthiness.

In step e) of the process of the present invention, the granules are dried to a moisture content of 0.5 to 7 wt% (wet weight). Preferably, the granules are dried to a moisture content of 1 to 6 wt% or 2.5 to 5.0 wt% (wet weight).

In one further embodiment, the process of the present invention does not make use of a binding agent, wherein the binding agent is a food gum. Consequently, the food granules of the present invention do not comprise a binding agent which is a food gum. Preferably, the food gum not present in the food granules is selected from the group consisting of agar-agar, alginate, carrageenan, cassia gum, cellulose gum, gellan gum, guar gum, konjac gum, locust bean gum, pectin gum, and xanthan gum. Today's consumers prefer more and more food products which are made with only natural food ingredients and do not contain any food additives. Therefore, the present invention provides now a new solution for making food granules which do not need anymore the use of a food additive binder such as a food gum. The resulting products are more natural, with less or no food additives, and consequently much preferred by most consumers today.

In a second aspect, the invention relates to food granules which are obtainable by the process of the present invention.

Preferably, the food granules of the present invention are porous granules and have a size from 0.5 to 8.0 mm, preferably from 0.8 to 5.0 mm, even more preferably from 0.9 to 3.5 mm, as determined by the longest diameter through the granule. It has been found by the inventors that this kind and size of food granules best and fastest dissolve in warm water.

In a further preferred embodiment, the food granules of the present invention have a bulk density of 0.37 to 0.57 kg/Liter, preferably of 0.40 to 0.51 kg/Liter, when packaged.

"Bulk density" is herein defined as the weight of many granules divided by the total volume that they occupy when packaged after step e) of the present process, when packaged for example into a bag or pouch. The total volume includes the volume of the granules, inter-particle void volume of the packaged granules, and granule internal pore volumes.

Particularly, the food granules of the present invention can be a concentrated soup, a concentrated sauce, a seasoning, a food condiment, or a food garnish.

Those skilled in the art will understand that they can freely combine all features of the present invention disclosed herein. In particular, features described for the process of the present invention may be combined with the product obtained by the process of the present invention and vice versa. Further, features described for different embodiments of the present invention may be combined.

Further advantages and features of the present invention are apparent from the figures and examples.

### Example 1

Four sets of trials were set up with the same ingredients but varying amounts as specified in the Tables 1 to 4. The amounts are indicated in weight percentages of the total mixture. The compositions, after addition of some water, where wet-cold granulated according to the process described below, with for each sample 1 to 4, either having pre-coated the citric acid powder with liquid soybean oil at room temperature (20°C) or with a palm fat shortening at 65°C. The efficiency of granulation, i.e. the through-put of material in kg/hour of wet mass through a 14 mesh sieve, was then determined with a standard pilot-scale wet extrusion granulator at 20°C. The results are indicated in the Tables 1 to 4, last line.

**Table 1: Sample 1 with oil/fat:citric acid ratio 2:1**

| **Ingredients** | **Oil Coating** | **Fat Coating** |
|---|---|---|
| Crystalline salt NaCl | 40 | 40 |
| Further cyrstalline ingredients 1*) | 43.4 | 43.4 |
| Spice powder | 1 | 1 |
| Corn starch | 11.4 | 11.4 |
| Fresh vegetable puree | 1.2 | 1.2 |
| Citric acid anhydrous powder | 1 | 1 |
| Liquid soybean oil | 2 | 0 |
| Solid palm fat 2*) | 0 | 2 |
| **Total** | **100** | **100** |
| Granulation throughput (kg/h) 3*) | 750 | 700 |

**Table 2: Sample 2 with oil/fat:citric acid ratio 1:1**

| **Ingredients** | **Oil Coating** | **Fat Coating** |
|---|---|---|
| Crystalline salt NaCl | 41 | 41 |
| Further cyrstalline ingredients 1^{∗}) | 43.4 | 43.4 |
| Spice powder | 1 | 1 |
| Corn starch | 11.4 | 11.4 |
| Fresh vegetable puree | 1.2 | 1.2 |
| Citric acid anhydrous powder | 1 | 1 |
| Liquid soybean oil | 1 | 0 |
| Solid palm fat 2^{∗}) | 0 | 1 |
| **Total** | **100** | **100** |
| Granulation throughput (kgth) 3^{∗}) | 700 | 550 |

**Table 3: Sample 3 with oil/fat:citric acid ratio 4:1**

| **Ingredients** | **Oil Coating** | **Fat Coating** |
|---|---|---|
| Crystalline salt NaCl | 38 | 38 |
| Further cyrstalline ingredients 1^{∗}) | 43.4 | 43.4 |
| Spice powder | 1 | 1 |
| Corn starch | 11.4 | 11.4 |
| Fresh vegetable puree | 1.2 | 1.2 |
| Citric acid anhydrous powder | 1 | 1 |
| Liquid soybean oil | 4 | 0 |
| Solid palm fat 2^{∗}) | 0 | 4 |
| **Total** | **100** | **100** |
| Granulation throughput (kg/h) 3^{∗}) | 760 | 720 |

**Table 4: Sample 4 with oil/fat:citric acid ratio 0.5:1**

| **Ingredients** | **Oil Coating** | **Fat Coating** |
|---|---|---|
| Crystalline salt NaCl | 41.5 | 41.5 |
| Further cyrstalline ingredients 1^{∗}) | 43.4 | 43.4 |
| Spice powder | 1 | 1 |
| Corn starch | 11.4 | 11.4 |
| Fresh vegetable puree | 1.2 | 1.2 |
| Citric acid anhydrous powder | 1 | 1 |
| Liquid soybean oil | 0.5 | 0 |
| Solid palm fat 2^{∗}) | 0 | 0.5 |
| **Total** | **100** | **100** |
| Granulation throughput (kg/h) 3^{∗}) | 690 | 550 |

Legend to Tables 1 to 4:
1*) Mainly sugar and monosodium glutamate
2*) Palm fat shortening: melting point 38-42°C
3*) Through-put in kg/hour of wet mass through a 14 mesh sieve with a standard wet extrusion granulator at 20°C.

### Granulation process:

The ingredients as listed in the Tables 1 to 4 were made into food granules according to the following process:
1) Coating the citric acid with oil or fat:
   Oil coating: The citric acid was blended with the soybean oil in a pilot scale ribbon blender until homogeneity and then continued mixing for another 3 minutes at 20°C;
   Fat coating: The citric acid was blended with the palm fat shortening in a pilot scale ribbon blender until homogeneity and then continued mixing for another 3 minutes at 50 to 65°C. Thereafter, the blend was cooled under continues mixing to 20°C.
2) Mixing all the other dry ingredients together in a plough share mixer until homogeneity and then keep mixing for another 3 minutes. Adding the oil and fat coated citric acid to individual batches of the mixed dry ingredients, respectively, and keep mixing the total mixtures for another 3 minutes.
3) Add the fresh vegetable puree (as aqueous composition) into the plough share mixer together to the other dry ingredients and the coated citric acid mixtures and keep mixing for another 3 minutes. A water content of about 10 wt% was then achieved for the wet mass by adding water. The wet mass was then transferred to a buffer tank.
4) The wet mass was then fed to a twin-head granulator and extruded through a 14 mesh sieve at 20°C to produce granules.
5) The maximal achievable throughput of the mass through the granulator was then recorded.

### Results and conclusions:

Although at the beginning, the granulation throughput of all samples was very high, this efficient throughput dropped very rapidly after time and adjusted itself to the throughput values as provided in the Tables 1-4. From those results it became evident that the wet mass comprising the oil coated citric acid maintained a higher granulation throughput, i.e. granulation efficiency, than the corresponding wet mass comprising fat coated citric acid. Without wishing to be bound to theory, it is believed by the inventors that the oil better absorbs and holds the extra water with the citric acid particles than the solid fat. It is then partial release of this extra water of the fat coated citric acid which changes the property of the wet mass and causes some caking and/or blockage of the granulation sieve.

### Example 2

After granulation of the compositions as described in Example 1, the granules where dried on a belt at room temperature. Thereafter, they were packed into different commercially sized packaging materials and their bulk densities were determined. The following individual bulk densities were determined for un-tapped packaged granules, i.e. measured directly after production and packaging, and for tapped packaged granules, i.e. measured after shipment of the packed material to a distributor:

| | | | | | | |
|---|---|---|---|---|---|---|
| Un-tapped Density | 0.460 | 0.371 | 0.410 | 0.440 | 0.497 | 0.417 |
| | 0.445 | 0.430 | 0.445 | 0.427 | 0.468 | 0.460 |
| Tapped Density | 0.510 | 0.442 | 0.460 | 0.480 | 0.568 | 0.475 |
| | 0.495 | 0.495 | 0.503 | 0.476 | 0.535 | 0.526 |

## Claims

1. A process for making food granules comprising citric acid particles, further crystalline ingredients, an oil, and optionally spices and/or flavorings, the process comprising the steps of:
a) coating the citric acid particles with oil;
b) mixing the oil coated citric acid particles with the further crystalline ingredients, and optionally the spices and/or flavorings;
c) adjusting the moisture content of the mixture of step b) to a water content of 7 - 13 wt% wet weight by adding water and/or an aqueous composition to result in a wet mass;
d) cold extruding the wet mass through a sieve into granules;
e) drying the granules to a moisture content of 0.5 - 7 wt% wet weight;
wherein the oil is liquid at a temperature of 20°C; wherein the food granules comprise the oil in relation to the citric acid particles in a dry weight ratio of 0.25:1 to 5:1;
wherein the food granules comprise the citric acid particles in an amount from 0.1 - 7.0 wt% weight per cent of the food granules;
wherein the steps a), b), c) and d) are carried out at a temperature between 4 and 30°C.

2. The process according to claim 1, wherein the citric acid particles are crystalline.

3. The process according to claim 1 or 2, wherein the citric acid particles are from 0.1 to 2.5 mm in size.

4. The process according to one of the preceding claims, wherein the further crystalline ingredients are selected from sodium chloride, monosodium glutamate, sugar or a combination thereof.

5. The process according to one of the preceding claims, wherein the oil is a vegetable oil.

6. The process according to one of the preceding claims, wherein the food granules comprise the oil in relation to the citric acid particles in a dry weight ratio of 0.5:1 to 4:1.

7. The process according to one of the preceding claims, wherein the food granules comprise the citric acid particles in an amount from 0.25 - 5.0 wt%, preferably from 0.5 - 4.0 wt%, more preferably from 0.75 - 2.5 wt% weight per cent of the food granules.

8. The process according to one of the preceding claims, wherein the food granules further comprise starch.

9. The process according to one of the preceding claims, wherein the spices and/or flavorings are added in step b) in the form of a powder.

10. The process according to one of the preceding claims, wherein step a) is carried out at a temperature between 8 and 25°C.

11. The process according to one of the preceding claims, wherein the steps b), c) and d) are carried out at a temperature between 8 and 25°C.

12. Food granules obtainable by one of the claims 1-11.

13. The food granules of claim 12, which are porous granules and have a size from 0.5 to 8.0 mm, preferably from 0.8 to 5.0 mm, as determined by the longest diameter through the granule.

14. The food granules of claim 12 or 13, having a bulk density of 0.37 to 0.57, preferably of 0.40 to 0.51 kg/Liter, when packaged.

15. The food granules of one of the claims 12 to 14, which are a concentrated soup, a concentrated sauce, a seasoning, a food condiment, or a food garnish.

## Patentansprüche

1. Verfahren zum Herstellen von Lebensmittelgranulat, umfassend Zitronensäurepartikel, weitere kristalline Inhaltsstoffe, ein Öl und wahlweise Gewürze und/oder Aromen, das Verfahren umfassend die Schritte:
a) Beschichten der Zitronensäurepartikel mit Öl;
b) Mischen der ölbeschichteten Zitronensäurepartikel mit den weiteren kristallinen Inhaltsstoffen und wahlweise den Gewürzen und/oder Aromen;
c) Anpassen des Feuchtigkeitsgehalts der Mischung von Schritt b) auf einen Wassergehalt von 7 bis 13 Gew.-% Nassgewicht durch Hinzufügen von Wasser und/oder einer wässrigen Zusammensetzung, um eine Nassmasse zu ergeben;
d) Kaltextrahieren der Nassmasse in Granulate durch ein Sieb;
e) Trocknen der Granulate auf einen Feuchtigkeitsgehalt von 0,5 bis 7 Gew.-% Nassgewicht;
wobei das Öl bei einer Temperatur von 20 °C flüssig ist;
wobei die Lebensmittelgranulate das Öl in Bezug auf die Zitronensäurepartikel in einem Trockengewichtsverhältnis von 0,25 - 1 bis 5 : 1 umfassen;
wobei die Lebensmittelgranulate die Zitronensäurepartikel in einer Menge von 0,1 bis 7,0 Gew.-% Gewichtsprozent der Lebensmittelgranulate umfassen;
wobei die Schritte a), b), c) und d) bei einer Temperatur zwischen 4 und 30 °C durchgeführt werden.

2. Verfahren nach Anspruch 1, wobei die Zitronensäurepartikel kristallin sind.

3. Verfahren nach Anspruch 1 oder 2, wobei die Zitronensäurepartikel 0,1 bis 2,5 mm groß sind.

4. Verfahren nach einem der vorstehenden Ansprüche, wobei die weiteren kristallinen Inhaltsstoffe aus Natriumchlorid, Mononatriumglutamat, Zucker oder einer Kombination davon ausgewählt sind.

5. Verfahren nach einem der vorstehenden Ansprüche, wobei das Öl ein Pflanzenöl ist.

6. Verfahren nach einem der vorstehenden Ansprüche, wobei die Lebensmittelgranulate das Öl in Bezug auf die Zitronensäurepartikel in einem Trockengewichtsverhältnis von 0,5 - 1 bis 4 - 1 umfassen.

7. Verfahren nach einem der vorstehenden Ansprüche, wobei die Lebensmittelgranulate die Zitronensäurepartikel in einer Menge von 0,25 bis 5,0 Gew.-%, vorzugsweise von 0,5 bis 4,0 Gew.-%, mehr bevorzugt von 0,75 bis 2,5 Gew.-% Gewichtsprozent der Lebensmittelgranulate umfassen.

8. Verfahren nach einem der vorstehenden Ansprüche, wobei die Lebensmittelgranulate ferner Stärke umfassen.

9. Verfahren nach einem der vorstehenden Ansprüche, wobei die Gewürze und/oder Aromen in Schritt b) in der Form eines Pulvers hinzugefügt werden.

10. Verfahren nach einem der vorstehenden Ansprüche, wobei Schritt a) bei einer Temperatur zwischen 8 und 25 °C durchgeführt wird.

11. Verfahren nach einem der vorstehenden Ansprüche, wobei die Schritte b), c) und d) bei einer Temperatur zwischen 8 und 25 °C durchgeführt werden.

12. Lebensmittelgranulate, die nach einem der Ansprüche 1 bis 11 erhältlich sind.

13. Lebensmittelgranulate nach Anspruch 12, die poröse Granulate sind und eine Größe von 0,5 bis 8,0 mm, vorzugsweise von 0,8 bis 5,0 mm, aufweisen, wie durch den längsten Durchmesser durch das Granulat bestimmt.

14. Lebensmittelgranulate nach Anspruch 12 oder 13, die eine Rohdichte von 0,37 bis 0,57, vorzugsweise von 0,40 bis 0,51 kg/Liter aufweisen, wenn sie verpackt sind.

15. Lebensmittelgranulate nach einem der Ansprüche 12 bis 14, die eine konzentrierte Suppe, eine konzentrierte Soße, ein Würzmittel, ein Lebensmittelgewürz oder eine Lebensmittelgarnierung sind.

## Revendications

1. Procédé de fabrication de granulés alimentaires comprenant des particules d'acide citrique, d'autres ingrédients cristallins, une huile, et éventuellement des épices et/ou des arômes, le procédé comprenant les étapes consistant à :
a) enduire d'huile les particules d'acide citrique ;
b) mélanger les particules d'acide citrique enduites d'huile avec les autres ingrédients cristallins, et éventuellement les épices et/ou les arômes ;
c) ajuster la teneur en humidité du mélange de l'étape b) à une teneur en eau de 7 à 13 % en poids humide en ajoutant de l'eau et/ou une composition aqueuse pour obtenir une masse humide ;
d) extruder à froid la masse humide à travers un tamis pour obtenir des granulés ;
e) sécher les granulés jusqu'à une teneur en humidité de 0,5 à 7 % en poids humide ;
et l'huile étant liquide à une température de 20 °C ; les granulés alimentaires comprenant de l'huile par rapport aux particules d'acide citrique dans un rapport pondéral sec de 0,25:1 à 5:1 ;
les granulés alimentaires comprenant les particules d'acide citrique en une quantité de 0,1 à 7,0 % en poids du poids des granulés alimentaires ;
les étapes a), b), c) et d) étant effectuées à une température comprise entre 4 et 30 °C.

2. Procédé selon la revendication 1, dans lequel les particules d'acide citrique sont cristallines.

3. Procédé selon la revendication 1 ou 2, dans lequel les particules d'acide citrique sont d'une taille de 0,1 à 2,5 mm.

4. Procédé selon l'une des revendications précédentes, dans lequel les autres ingrédients cristallins sont choisis parmi le chlorure de sodium, le glutamate monosodique, le sucre ou une combinaison de ceux-ci.

5. Procédé selon l'une des revendications précédentes, dans lequel l'huile est une huile végétale.

6. Procédé selon l'une des revendications précédentes, dans lequel les granulés alimentaires comprennent de l'huile par rapport aux particules d'acide citrique dans un rapport pondéral sec de 0,5:1 à 4:1.

7. Procédé selon l'une des revendications précédentes, dans lequel les granulés alimentaires comprennent les particules d'acide citrique en une quantité de 0,25 à 5,0 % en poids, de préférence de 0,5 à 4,0 % en poids, plus préférablement de 0,75 à 2,5 % en poids du poids des granulés alimentaires.

8. Procédé selon l'une des revendications précédentes, dans lequel les granulés alimentaires comprennent en outre de l'amidon.

9. Procédé selon l'une des revendications précédentes, dans lequel les épices et/ou les arômes sont ajoutés à l'étape b) sous forme de poudre.

10. Procédé selon l'une des revendications précédentes, dans lequel l'étape a) est effectuée à une température entre 8 et 25 °C.

11. Procédé selon l'une des revendications précédentes, dans lequel les étapes b), c) et d) sont effectuées à une température entre 8 à 25 °C.

12. Granulés alimentaires pouvant être obtenus selon l'une des revendications 1 à 11.

13. Granulés alimentaires selon la revendication 12, qui sont des granulés poreux et ont une taille allant de 0,5 à 8,0 mm, de préférence de 0,8 à 5,0 mm, telle que déterminée par le diamètre le plus long à travers le granulé.

14. Granulés alimentaires selon la revendication 12 ou 13, ayant une masse volumique apparente de 0,37 à 0,57, de préférence de 0,40 à 0,51 kg/litre, lorsqu'ils sont conditionnés.

15. Granulés alimentaires selon l'une des revendications 12 à 14, qui sont une soupe concentrée, une sauce concentrée, un assaisonnement, un condiment alimentaire, ou une garniture.
